(19) Europäisches Patentamt
European Patent Office
Office européen des brevets

(11) **EP 4 458 886 A1**

(12) **EUROPEAN PATENT APPLICATION**
published in accordance with Art. 153(4) EPC

(43) Date of publication:
**06.11.2024 Bulletin 2024/45**

(21) Application number: **22915911.6**

(22) Date of filing: **22.12.2022**

(51) International Patent Classification (IPC):
**C08J 5/04** (2006.01)  **C08J 3/12** (2006.01)

(52) Cooperative Patent Classification (CPC):
**C08J 3/12; C08J 5/04**

(86) International application number:
**PCT/JP2022/047396**

(87) International publication number:
**WO 2023/127688 (06.07.2023 Gazette 2023/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.12.2021  JP 2021213902**

(71) Applicant: **MITSUBISHI GAS CHEMICAL
COMPANY, INC.**
**Chiyoda-ku**
**Tokyo 100-8324 (JP)**

(72) Inventors:
• **SUGIYAMA Masahide**
  **Tokyo 125-0051 (JP)**
• **MIZUSAKA Tetsuhiko**
  **Tokyo 125-0051 (JP)**

(74) Representative: **Hoffmann Eitle
Patent- und Rechtsanwälte PartmbB
Arabellastraße 30
81925 München (DE)**

(54) **PELLETS, MOLDED ARTICLE, AND PELLET MANUFACTURING METHOD**

(57) To provide pellets, a molded article formed from the pellets, and a method for producing pellets. The Pellets contain: a thermoplastic resin; and a bundle of 2000 to 30000 rayon fibers arranged in parallel in the fiber length direction, wherein at least a portion of the thermoplastic resin is impregnated into the bundle of 2000 to 30000 rayon fibers, the thermoplastic resin has a melt flow rate (MFR) of 70 to 200 g/10 min when measured at a temperature of 230°C and a load of 2.16 kg according to JIS K 7210, rayon fibers of the bundle have a number average fiber diameter of 5 to 30 um, and a number average length of the pellets is from 3 to 30 mm.

FIG. 1

EP 4 458 886 A1

**Description**

Technical Field

The present invention relates to pellets, a molded article, and a method for producing pellets.

Background Art

Molded articles formed from a thermoplastic resin are used as metal substitutes for the purpose of weight reduction. To increase the mechanical strength of a molded article formed from such a thermoplastic resin, production and development of a resin composition blended with a reinforcing fiber are in progress.

For example, there is disclosed a method for producing fiber-reinforced resin pellets, the method including:

supplying a fiber bundle in which fibers are bundled and a molten resin to a die, bringing the fiber bundle and the molten resin into contact with each other in the die to impregnate the fiber bundle with the molten resin; and drawing out the fiber bundle impregnated with the molten resin from the die, cooling and cutting the fiber bundle, the method characterized by using fibers with ratios of long diameters to short diameters (long diameters/short diameters) in fiber cross sections of 2.5 to 6 as the fibers.

Citation List

Patent Documents

Patent Document 1: JP 2005-349697 A

Summary of Invention

Technical Problem

As described above, pellets are produced by impregnating a reinforcing fiber bundle of glass fibers or the like with a thermoplastic resin, taking up the impregnated fiber bundle as a long-fiber strand, and then cutting the long-fiber strand with a pelletizer. However, it has been found that the pellets thus obtained may be liable to crack.

Thus, an object of the present invention is to solve such an issue and provide pellets not liable to crack during production, a molded article formed from the pellets, and a method for producing pellets.

Solution to Problem

As a result of studies made by the present inventor to solve the above issue, it has been found that cracking of pellets can be effectively reduced by using rayon fibers satisfying given conditions as reinforcing fibers and using a thermoplastic resin with a given MFR as a thermoplastic resin to be impregnated, and further adjusting the pellet length.

Specifically, the above issue has been solved by the following means.

(1) Pellets containing:

a thermoplastic resin; and
a bundle of 2000 to 30000 rayon fibers arranged in parallel in the fiber length direction, in which
at least a portion of the thermoplastic resin is impregnated into the bundle of 2000 to 30000 rayon fibers,
the thermoplastic resin has a melt flow rate (MFR) of 70 to 200 g/10 min when measured at a temperature of 230°C and a load of 2.16 kg according to JIS K 7210,
the rayon fibers of the bundle have a number average fiber diameter of 5 to 30 um, and
a number average length of the pellets is from 3 to 30 mm.

(2) The pellets according to (1), in which the thermoplastic resin contains at least one selected from polypropylene resins and polyacetal resins.

(3) The pellets according to (1) or (2), in which the thermoplastic resin contains

an acid-unmodified polypropylene resin, and
an acid-modified polypropylene resin modified with maleic anhydride and/or maleic acid.

(4) The pellets according to any one of (1) to (3), in which the pellets are obtained by impregnating a bundle of 2000 to 30000 rayon fibers in a state of being aligned in the length direction with the thermoplastic resin in a molten state to integrate, and then cutting the integrated bundle to have a number average length of 3 to 30 mm.

(5) The pellets according to any one of (1) to (4), in which number average fiber length of the rayon fibers contained in the pellets is from 3 to 30 mm.

(6) The pellets according to any one of (1) to (5), in which an apparent Young's modulus of the rayon fibers is from 10 to 50 GPa.

(7) The pellets according to any one of (1) to (6), in which a tensile elongation of the rayon fibers is from 3 to 20%.

(8) The pellets according to any one of (1) to (7), in which in the pellets, a content of the thermoplastic resin is from 90 to 60 mass%, and a content of the rayon fibers is from 40 to 10 mass%.

(9) The pellets according to any one of (1) to (8), in which an X-ray orientation of the rayon fibers is 90% or more.

(10) A pellet blend containing the pellets described in any one of (1) to (9) and another type of thermoplastic resin pellets.

(11) A molded article formed from the pellets described in any one of (1) to (9) and/or the pellet blend described in (10).

(12) A method for producing the pellets described in any one of (1) to (9), the method including impregnating a bundle of 2000 to 30000 rayon fibers in a state of being aligned in the length direction with a thermoplastic resin in a molten state to integrate, and then cutting the integrated bundle to have a number average length of 3 to 30 mm.

Advantageous Effects of Invention

The present invention has made it possible to provide pellets not liable to crack during production, a molded article formed from the pellets, and a method for producing the pellets.

Brief Description of Drawings

FIG. 1 is a schematic view illustrating a method for producing pellets (a portion for cutting a strand).
FIG. 2 is a schematic view illustrating an apparatus for producing pellets of Examples.

Description of Embodiments

Embodiments to implement the present invention (hereinafter referred to simply as "the present embodiment(s)") will be described in detail below. The present embodiments below are examples for describing the present invention, and the present invention is not limited only to the present embodiments.

In the present specification, "to" is used to mean that numerical values described before and after "to" are included as the lower limit value and the upper limit value, respectively.

In the present specification, various physical property values and characteristic values are those at 23°C unless otherwise noted.

If a standard described in the present specification differs in a method for measurement or the like according to the year, the standard is considered to be based on the standard as of January 1, 2021, unless otherwise noted.

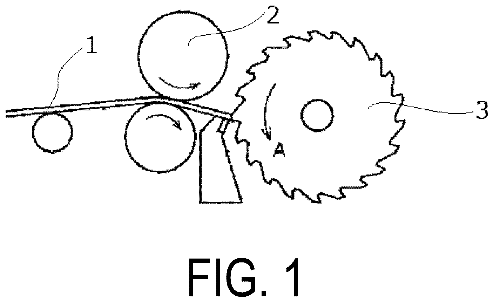

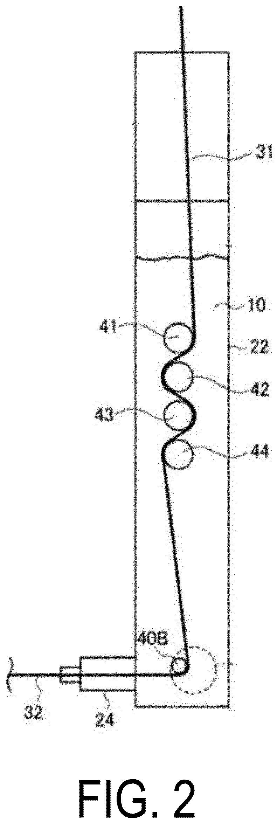

FIGS. 1 and 2 are each a schematic view, and the scale or the like may not match the actual scale.

Pellets of the present embodiment are pellets containing:

a thermoplastic resin; and
a bundle of 2000 to 30000 rayon fibers arranged in parallel in the fiber length direction,
and characterized in that
at least a portion of the thermoplastic resin is impregnated into the bundle of 2000 to 30000 rayon fibers,
the thermoplastic resin has a melt flow rate (MFR) of 70 to 200 g/10 min when measured at a temperature of 230°C and a load of 2.16 kg according to JIS K 7210,
rayon fibers of the bundle have a number average fiber diameter of 5 to 30 um, and
a number average length of the pellets is from 3 to 30 mm.

Such a constitution makes it possible to provide pellets not liable to crack during production, a molded article formed from the pellets, and a method for producing pellets.

In the present specification, a bundle of rayon fibers may be referred to as a rayon fiber bundle.

In the present embodiment, a bundle of 2000 to 30000 rayon fibers arranged in parallel in the fiber length direction is used. In impregnating such a long-fiber bundle with a thermoplastic resin to form pellets, usually, as illustrated in FIG. 1, a fiber bundle 1 impregnated with the thermoplastic resin is taken up in the form of a strand with a roll 2 or the like and cut to have a desired pellet length with a pelletizer 3. A pelletizer 3 cuts the strand by rotating in the direction A in FIG. 1. Here, when the strand is cut, energy is applied to the strand. It was presumed that if this energy is not well absorbed by the strand before the strand is cut, the energy cannot be absorbed at the interface between the thermoplastic resin and the rayon fibers or between the thermoplastic resins and the resulting pellets would crack. Fibers other than glass fibers were found suitable as reinforcing fibers to solve this issue. That is, using glass fibers as the reinforcing fibers was found to make the pellets liable to crack. This was presumably due to high rigidity (e.g., apparent Young's modulus) and too low a toughness (e.g., tensile elongation) of glass fibers. On the other hand, for example, fibers with too low a rigidity, such as polyester fibers, do not function as reinforcing fibers. In the present embodiment, the use of rayon fibers, which are fibers with well-balanced rigidity and toughness, was presumed to be able to prevent the cracking of the pellets.

Furthermore, adjusting the MFR of the thermoplastic resin to be impregnated was able to effectively prevent the cracking of the pellets. That is, the thermoplastic resin to be impregnated having a low MFR was found to make it difficult for the resin component to be impregnated into the bundle of rayon fibers and result in frequent occurrence of cracking of the pellets when the bundle passes through a take-up machine and/or a pelletizer. On the other hand, the thermoplastic resin to be impregnated having a high MFR was found to be brittle and make the pellets liable to crack. In the present embodiment, using the thermoplastic resin satisfying a given MFR was presumed to be able to prevent the cracking of the pellets.

Thermoplastic Resin

The pellets of the present embodiment contain a thermoplastic resin.

The thermoplastic resin used in the present embodiment has a melt flow rate (MFR) of 70 to 200 g/10 min when measured at a temperature of 230°C and a load of 2.16 kg according to JIS K 7210. With the MFR of not less than the lower limit value, the thermoplastic resin can be easily impregnated into the rayon fiber bundle and can effectively prevent the cracking of the pellets during production. In addition, with the MFR of not more than the upper limit value, the thermoplastic resin is made hard and can effectively prevent the cracking of the pellets during production.

The MFR of the thermoplastic resin is preferably 72 g/10 min or more, more preferably 75 g/10 min or more, even more preferably 78 g/10 min or more, and still more preferably 80 g/10 min, or further may be 90 g/10 min or more or 100 g/10 min or more. The MFR of the thermoplastic resin is also preferably 200 g/10 min or less, more preferably 190 g/10 min or less, even more preferably 180 g/10 min or less, still more preferably 170 g/10 min or less, and yet more preferably 160 g/10 min or less, or may be 140 g/10 min or less or 120 g/10 min or less.

For the pellets of the present embodiment containing two or more thermoplastic resins, the MFR is that of the mixture.

The type of the thermoplastic resin used in the present embodiment is not particularly specified as long as the MFR is satisfied, but examples include a polyolefin resin, a polyamide resin, a styrene resin, a polycarbonate resin, poly(vinyl chloride), poly(vinylidene chloride), an acrylic resin, a polyester resin, a polyacetal resin, and a polyphenylene sulfide resin. The thermoplastic resin preferably contains at least one selected from polyolefin resins and polyacetal resins, more preferably contains at least one selected from polyolefin resins and polyacetal resins, and even more preferably contains a polyolefin resin.

Examples of the polyolefin resin that can be used include a polypropylene resin, a polyethylene resin, a poly-1-butene resin, a polyisobutylene resin, an ethylene-propylene copolymer, an ethylene-propylene-diene terpolymer (provided that the diene component as a raw material is 10 mass% or less), a poly(methylpentene) resin, a random, block, or graft copolymer of ethylene and/or propylene (provided that these components as raw materials are 50 mol% or more) and another copolymerizable monomer (such as vinyl acetate, an alkyl methacrylate, an alkyl acrylate, or an aromatic vinyl).

When a polyolefin resin is used as the thermoplastic resin, a portion of the resin is preferably an acid-modified polyolefin resin to facilitate the impregnation into the rayon fiber bundle.

The acid-modified polyolefin resin is preferably an acid-modified polyolefin resin modified with maleic anhydride and/or maleic acid (preferably a maleic anhydride-modified polypropylene resin).

In the present embodiment, when an acid-unmodified polyolefin resin and an acid-modified polyolefin resin are used in combination as the polyolefin resins, the acid amount in the thermoplastic resins is preferably in a range of 0.005 to 0.5 mass% on average in terms of maleic anhydride.

In the present embodiment, the thermoplastic resin particularly preferably contains an acid-unmodified polypropylene resin and a maleic anhydride-modified polypropylene resin.

In the thermoplastic resin containing an acid-unmodified polyolefin resin and an acid-modified polyolefin resin, the blend ratio (mass ratio) of the acid-unmodified polyolefin resin per part by mass of the acid-modified polyolefin resin is preferably 5 parts by mass or more, more preferably 7 parts by mass or more, even more preferably 10 parts by mass or more, and preferably 99 parts by mass or less, more preferably 70 parts by mass or less, even more preferably 60 parts by mass or less, still more preferably 50 parts by mass or less, and may be 40 parts by mass or less.

In the present embodiment, the thermoplastic resin may contain only one each of an acid-modified polyolefin resin and an acid-unmodified polyolefin resin or may contain two or more. In the thermoplastic resin containing two or more acid-modified polyolefin resins and acid-unmodified polyolefin resins, the total amount is preferably in the above range.

On the other hand, in the thermoplastic resin containing a polyacetal resin, the type is not particularly limited, and the polyacetal resin may be a homopolymer containing only a divalent oxymethylene group as a constituent unit or a copolymer containing a divalent oxymethylene group and a divalent oxyalkylene group having from 2 to 6 carbons as constituent units.

Examples of the oxyalkylene group having from 2 to 6 carbons include an oxyethylene group, an oxypropylene group, and an oxybutylene group.

In the polyacetal resin, the proportion of the oxyalkylene group having from 2 to 6 carbons in the total number of moles of the oxymethylene group and the oxyalkylene group having from 2 to 6 carbons is not particularly limited and is from 0.5 to 10 mol%.

To produce the polyacetal resin, trioxane is usually used as a main raw material. In addition, to introduce an oxyalkylene group having from 2 to 6 carbons into the polyacetal resin, a cyclic formal or a cyclic ether can be used. Specific examples of the cyclic formal include 1,3-dioxolane, 1,3-dioxane, 1,3-dioxepane, 1,3-dioxocane, 1,3,5-trioxepane, and 1,3,6-trioxocane, and specific examples of the cyclic ether include ethylene oxide, propylene oxide, and butylene oxide. To introduce an oxyethylene group into the polyacetal resin, 1,3-dioxolane is used as a main raw material. To introduce an oxypropylene group, 1,3-dioxane is used as a main raw material. To introduce an oxybutylene group, 1,3-dioxepane is used as a main raw material. In the polyacetal resin, the amount of a hemiformal end group, the amount of a formyl end group, and the amount of an end group unstable to heat, acid, and base are preferably small. Here, the hemiformal end group is a group represented by -OCH2OH, and the formyl end group is a group represented by -CHO.

The thermoplastic resin in the present embodiment may contain a resin additive without departing from the spirit of the present invention. Specific examples include stabilizers (such as thermal stabilizers and antioxidants), ultraviolet absorbers, antistatic agents, flame retardants, flame retardant aids, antidripping agents, antifogging agents, antiblocking agents, fluidity improvers, plasticizers, dispersants, and antimicrobial agents. In the thermoplastic resin blended with a component of these, the total amount is preferably 10 mass% or less of the thermoplastic resin or may be 5 mass% or less.

The content of the thermoplastic resin in the pellets of the present embodiment is preferably 60 mass% or more, more preferably 62 mass% or more, even more preferably 64 mass% or more, still more preferably 66 mass% or more, and yet more preferably 67 mass% or more. With the content of not less than the lower limit values above, the strength, rigidity, and impact resistance tend to improve. In addition, the content of the thermoplastic resin in the pellets of the present embodiment is preferably 90 mass% or less, more preferably 85 mass% or less, even more preferably 80 mass% or less, still more preferably 75 mass% or less, and yet more preferably 70 mass% or less. With the content of not more than the upper limit values above, the impregnability and the preventive effect on strand breakage tend to improve.

The pellets of the present embodiment may contain only one thermoplastic resin or may contain two or more. In the pellets containing two or more thermoplastic resins, the total amount is preferably in the above ranges.

Rayon Fibers

The pellets of the present embodiment contain a bundle of 2000 to 30000 rayon fibers arranged in parallel in the fiber length direction. Pellets containing long fibers are obtained by using the bundle of 2000 to 30000 rayon fibers thus aligned in the length direction and cutting the bundle as described above. In particular, the pellet length is usually the rayon fiber length, thus a molded article with excellent mechanical strength tends to be more easily obtained.

The rayon fibers used in the present embodiment have a number average fiber diameter of 5 to 30 um. With the number average fiber diameter of not less than the lower limit value above, the impregnability of the thermoplastic resin into the rayon fibers and the preventive effect on strand breakage tend to improve. In addition, with the number average fiber diameter of not more than the upper limit value above, the reinforcing effect of the rayon fibers as the reinforcing fibers tend to further improve.

The number average fiber diameter of the rayon fibers is preferably 7 um or more, more preferably 9 um or more, even more preferably 10 um or more, and still more preferably 11 um or more. In addition, the number average fiber diameter of the rayon fibers is preferably 28 um or less, more preferably 25 um or less, even more preferably 20 um or less, still more preferably 15 um or less, and yet more preferably 13 um or less.

The rayon fibers used in the present embodiment preferably has an X-ray orientation of 90% or more. With the X-ray orientation of 90% or more, cellulose molecules are highly oriented in the longitudinal direction of the fibers, and the rayon fibers have a high apparent Young's modulus and a high interface strength with the thermoplastic resin, resulting in fibers with excellent properties as long fibers. That is, the rayon fibers are quite excellent as fibers for a long-fiber-reinforced resin material. The X-ray orientation is preferably 91% or more and more preferably 92% or more. The upper limit of the X-orientation may be 100% but is practically 99% or less, 98% or less, 97% or less, 96% or less, or 95% or less.

The apparent Young's modulus of the rayon fibers used in the present embodiment is preferably 10 GPa or more, more preferably 12 GPa or more, even more preferably 14 GPa or more, still more preferably 15 GPa or more, and yet more preferably 16 GPa or more. With the apparent Young's modulus of not less than the lower limit values above, the rigidity of the pellets tends to further improve. In addition, the apparent Young's modulus of the rayon fibers is preferably 50 GPa or less, more preferably 45 GPa or less, even more preferably 40 GPa or less, still more preferably 36 GPa or less, and yet more preferably 35 GPa or less. With the apparent Young's modulus of not more than the upper limit values above, the reducing effect on the pellet cracking tends to further improve.

The tensile elongation of the rayon fibers used in the present embodiment is preferably 3% or more, more preferably 5% or more, even more preferably 7% or more, still more preferably 9% or more, yet more preferably 11% or more, and still even more preferably 13% or more. With the tensile elongation of not less than the lower limit values above, the reducing effect on the pellet cracking tends to further improve. In addition, the tensile elongation of the rayon fibers is preferably 20% or less, more preferably 19% or less, even more preferably 18% or less, and still more preferably 17% or less. With the tensile elongation of not more than the upper limit values above, the rigidity of the pellets tends to further improve.

In particular, the rayon fibers used in the present embodiment satisfying the above orientation, apparent Young's modulus, and tensile elongation improves the mechanical strength of the resulting molded article.

Examples of a raw material that can be used for the rayon fibers used in the present embodiment include viscose rayon, polynosic, modal, cupra, lyocell (Tencel), Bocell, and FORTIZAN ([available from CELANESE Corporation] fibers obtained by stretching cellulose acetate and then saponifying the stretched cellulose acetate with an alkali).

The content of the rayon fibers in the pellets of the present embodiment is preferably 10 parts by mass or more, more preferably 20 parts by mass or more, and even more preferably 30 parts by mass or more per 100 parts by mass of the thermoplastic resin. With the content of not less than the lower limit values above, the strength, rigidity, and impact resistance of the resulting molded article tend to further improve. In addition, the content of the rayon fibers in the pellets of the present embodiment is preferably 100 parts by mass or less, more preferably 90 parts by mass or less, even more preferably 80 parts by mass, still more preferably 70 parts by mass, and yet more preferably 60 parts by mass per 100 parts by mass of the thermoplastic resin. With the content of not more than the upper limit values above, the reducing effect on the pellet cracking of the resulting molded article tends to further improve.

The content of the rayon fibers in the pellets of the present embodiment is preferably 10 mass% or more, more preferably 15 mass% or more, even more preferably 16 mass% or more, still more preferably 17 mass% or more, yet more preferably 18 mass% or more, and still even more preferably 19 mass% or more. With the content of not less than the lower limit values above, the strength, rigidity, and impact resistance of the resulting molded article tend to further improve. In addition, the content of the rayon fibers in the pellets of the present embodiment is preferably 40 mass% or less, more preferably 38 mass% or less, even more preferably 36 mass% or less, still more preferably 35 mass% or less, yet more preferably 34 mass% or less, and still even more preferably 33 mass% or less. With the content of not more than the upper limit values above, the reducing effect on the pellet cracking of the resulting molded article tends to further improve.

The pellets of the present embodiment may contain only one type of rayon fibers or may contain two or more types. In the pellets containing two or more types of rayon fibers, the total amount is preferably in the above ranges.

Pellets

The pellets of the present embodiment are pellets containing a thermoplastic resin and a bundle of 2000 to 30000 rayon fibers arranged in parallel in the fiber length direction. In the pellets of the present embodiment, at least a portion of the thermoplastic resin is impregnated into the bundle of rayon fibers. Although the thermoplastic resin is ideally impregnated into the center of the rayon fiber bundle, there may be a region not impregnated with the thermoplastic resin in the center of the rayon fiber bundle. The pellets of the present embodiment have a number average length of 3 to 30 mm. In addition, the number average fiber length of the rayon fibers contained in the pellets is usually from 3 to 30 mm. Such pellets are also referred to as long-fiber pellets and are known as fibers with long fiber length of the reinforcing fibers in the pellets.

In the present embodiment, the number average length of the pellets is preferably 4 mm or more, and preferably 25 mm or less, more preferably 20 mm or less, even more preferably 15 mm or less, still more preferably 10 mm or less, yet more preferably 8 mm or less, or may be 7 mm or less.

The number average fiber length of the rayon fibers contained in the pellets in the present embodiment is preferably the same as the number average length of the pellets. The above "same" is meant to include the "same" in a geometric sense as well as those regarded as the same in the technical field of the present invention. For example, as will be described in detail later, for the pellets obtained by impregnating a bundle of 2000 to 30000 rayon fibers in a state of being aligned in the length direction with the thermoplastic resin in a molten state to integrate and then cutting the integrated bundle to have a number average length of 3 to 30 mm, the number average length of the pellets and the number average fiber length of the rayon fibers can be said to be the same.

Thus, in the present embodiment, the preferred range of the number average fiber length of the rayon fibers in the pellets is the same as the preferred range of the pellet length.

If the number of the rayon fibers constituting the rayon fiber bundle exceeds 30000, the molten thermoplastic resin cannot be impregnated into the center of the fiber bundle, and this would reduce the dispersion of the fibers and impair the appearance and mechanical strength when the fiber-reinforced resin composition is molded. With the number of the rayon fibers less than 2000, there would arise a problem in production, such as breakage of the fiber bundle during production of the resin-impregnated fiber bundle. The number of the rayon fibers is preferably 3000 or more, and more preferably 25000 or less, even more preferably 20000 or less, still more preferably 15000 or less, yet more preferably 10000 or less, still even more preferably 8000 or less, or may be 7000 or less or 6000 or less.

In the pellets of the present embodiment, the total content of the thermoplastic resin and the rayon fibers preferably accounts for 85 mass% or more, more preferably accounts for 90 mass% or more, even more preferably accounts for 95 mass% or more, still more preferably accounts for 98 mass% or more, and yet more preferably accounts for 99 mass% or more of the pellets.

The pellets of the present embodiment can be produced by impregnating a bundle of 2000 to 30000 rayon fibers in a state of being aligned in the length direction with the thermoplastic resin in a molten state to integrate, and then cutting the integrated bundle to have a number average length of 3 to 30 mm. More specifically, the pellets of the present embodiment can be produced by adhering a thermoplastic resin in a molten state to a bundle of 2000 to 30000 rayon fibers aligned in the length direction, taking up the fibers as a strand, and cutting the strand with a pelletizer.

In addition to the above, the methods for producing the strand (the long-fiber rayon fiber bundle impregnated with the thermoplastic resin) and the pellets from the strand can be produced by a well-known production method. For example, a method described in JP H06-313050 A, JP 2007-176227 A, JP H06-002344 B, JP H06-114832 A, JP H06-293023 A, JP H07-205317 A, JP H07-216104 A, JP H07-251437 A, JP H08-118490 A, or the like can be applied.

The pellets of the present embodiment can be molded into a molded article. When a molded article is obtained, another component can be blended as necessary in addition to the pellets described above.

Examples of another component include a thermoplastic resin and a resin additive. Examples of the thermoplastic resin include a polyolefin resin, a polyamide resin, a styrene resin, a polycarbonate resin, poly(vinyl chloride), poly(vinylidene chloride), an acrylic resin, a polyester resin, a polyacetal resin, and a polyphenylene sulfide resin, and at least one selected from polyolefin resins and polyacetal resins is preferred. In addition, examples of the resin additive include a low shrinkage agent, a flame retardant, a flame retardant aid, a plasticizer, an antioxidant, an ultraviolet absorber, a colorant, a pigment, and a filler.

The pellets of the present embodiment may also be used as a pellet blend together with another type of thermoplastic resin pellets. Blending with another type of thermoplastic resin pellets can also adjust the proportion of rayon fibers in the resulting molded article. The pellets of the present embodiment have good dispersibility in the molten resin and thus can uniformly disperse the rayon fibers in the resulting molded article.

The molded product of the present embodiment is formed from the pellets of the present embodiment and/or the above pellet blend.

In the molded article of the present embodiment, the rayon fibers in which cellulose molecules are highly oriented in the longitudinal direction of the fibers (e.g., an X-ray orientation of 90% or more) can be used. Thus, this increases the strength of the fibers and effectively prevents the rayon fibers from being shortened due to breakage. In addition, the fibers themselves also have high strength and elastic modulus and thus can increase the mechanical strength (such as bending modulus of elasticity) of the resulting molded article.

Furthermore, the molded article obtained from the pellets of the present embodiment contains rayon fibers with a given apparent Young's modulus and is lighter than a molded article containing inorganic fibers, such as glass fibers, (that is, the density can be reduced) and thus can provide a molded article having a large specific elastic modulus (bending modulus of elasticity/density) .

The molded article of the present embodiment can be formed into a desired shape according to the application, but the specific elastic modulus can be increased as described above. Thus, when the molded article is formed into a thin plate-shaped molded article, a molded article with lightweight and high mechanical strength can be obtained. When the molded article of the present embodiment is formed into a thin plate-shaped molded article, a molded article with high mechanical strength can be obtained even though the thickness is, for example, from 1 to 5 mm.

In addition, the molded article formed from the pellets of the present embodiment contains rayon fibers and thus leaves no combustion residue, such as glass fibers, even when burned.

The molded article of the present embodiment is lightweight and has high mechanical strength (in particular, specific elastic modulus) and thus can be used as a substitute for a metal part used in various fields, such as electrical/electronic equipment, communication devices, automobiles, building materials, and daily necessities, and is particularly suitable as a housing for various equipment or a plate-shaped exterior material.

Examples

The present invention will be described more specifically with reference to examples below. Materials, amounts used, proportions, processing details, processing procedures, and the like described in examples below can be appropriately changed without departing from the spirit of the present invention. Thus, the scope of the present invention is not limited to the specific examples described below.

If a measuring device used in examples is difficult to obtain due to discontinuation or the like, another device with equivalent performance can be used for measurement.

1. Raw Materials

PP1: a polypropylene resin (available from Japan Polypropylene Corporation with a product number of BC10HRF, MFR 100 g/10 min)

PP2: A polypropylene resin (available from Japan Polypropylene Corporation with a product number of BC10HRF, MFR 100 g/10 min) and a soft polypropylene (available from Idemitsu Kosan Co., Ltd. with a product number of L-MODU S-600, MFR 2600 g/10 min) were dry-blended at a mass ratio of 100/30. The MFR after blending was 150 g/10 min.

PP3: A polypropylene resin (available from Japan Polypropylene Corporation with a product number of BC10HRF, MFR 100 g/10 min) and A soft polypropylene (available from Idemitsu Kosan Co., Ltd. with a product number of L-MODU S-600, MFR 2600 g/10 min) were dry-blended at a mass ratio of 100/70. The MFR after blending was 300 g/10 min.

PP4: a polypropylene resin (available from Japan Polypropylene Corporation with a product number of BC05B, MFR 50 g/10 min)

PP5: a polypropylene resin (available from Japan Polypropylene Corporation with a product number of BC06C, MFR 60 g/10 min)

PP6: a polypropylene resin (available from Japan Polypropylene Corporation with a product number of BC08F, MFR 75 g/10 min)

MAPP: a maleic anhydride-modified polypropylene resin, available from Sanyo Chemical Industries, Ltd. with a product number of Yumex 1001, MFR 230 g/10 min

Rayon fiber bundle: available from Cordenka with a product number of RT700, number average fiber diameter 13 pm, X-ray orientation 92%, number of fibers 1000, apparent Young's modulus 16 GPa, tensile elongation 16%

Glass fiber bundle: available from Nippon Electric Glass Co., Ltd. with a product number of T-431N, number average fiber diameter 17 $\mu$m, number of fibers 4000, apparent Young's modulus 74 GPa, tensile elongation 3%

2. Methods for Measuring Physical Property Values of Raw Materials

Melt flow rate (MFR)

The melt flow rates of the thermoplastic resins and the resin components were measured at a temperature of 230°C and a load of 2.16 kg according to JIS K 7210. The unit is g/10 min.

X-ray orientation

A scintillation counter was fixed at $2\theta = 20.0°$ corresponding to the diffraction angle of the (101) plane, a lightly combed fiber bundle was rotated perpendicularly to the incident X-ray, the diffracted X-ray intensity at the azimuth angle $\psi$ was measured, and the X-ray orientation was calculated by the following equation described in "Cellulose and Cellulose Derivatives" 2nd. ed., Vol. II, Interscience publishers, New York (1954). In the equation, $\psi 1/2$ is a half width expressed by the azimuth angle (degrees).

$$fc (\%) = \{(1 - (\psi 1/2/180)) \times 100$$

The apparatuses and conditions used in the measurement were as follows.

· Apparatus: RINT2550 available from Rigaku Corporation
· Attachment: a fiber sample stage
· X-ray source: CuKa
· Output: 40 kV 370 mA
· Detector: a scintillation counter

Apparent Young's modulus

The apparent Young's modulus of the rayon fibers was measured in accordance with JIS L1013 and expressed in units of GPa.

Tensile elongation

The tensile elongation of the rayon fibers was measured in accordance with JIS L1013 at a sample fiber length of 2.5 cm and a crosshead speed of 2.5 cm/min after moisture conditioning in an atmosphere of 20°C and a relative humidity of 65% for one week and expressed in units of %.

Number average fiber diameter

For the number average fiber diameter of the rayon fibers, the fineness per fiber was measured with an automatic vibrating type fiber fineness meter (DENICON DC-21 available from Search Co., Ltd.) by attaching a 0.1-g weight to one fiber with a sample fiber length of 2.5 cm after moisture conditioning in an atmosphere of 20°C and a relative humidity of 65% for one week. The fiber diameter when the fiber is approximated to have a circular cross section is calculated using the measured fiber fineness and the specific gravity (1.5) of the rayon fibers, and the average value of N = 30 was taken as the number average fiber diameter of the rayon fibers.

3. Examples 1 to 4 and Comparative Examples 1 to 4

Production of pellets

Among the components described in Table 1, the components except for the rayon fibers were supplied from a top feed port of a twin-screw extruder (AS type 30 m/m (trade name) available from Nakatani Machinery Ltd.) in the proportions (unit: mass%) shown in Table 1, melt-kneaded at a cylinder setting temperature of 200°C and a screw rotation speed of 10 rpm, and a melt of the resin components was obtained.

Using a long-fiber pellet production apparatus (KOSLFP-112 (trade name) available from Kobe Steel, Ltd.), while a rayon fiber roving or glass fiber roving 31 was opened and pulled in a bundled state and in a preheated state at 50°C to have the number of fibers described in Table 1, the roving was impregnated with a melt 10 of the resin components obtained above through an impregnation die 22 configured as illustrated in FIG. 2. The roving was taken up as a strand 32 at a drawing speed of 20 m/min and cut to have a pellet length shown in Table 1, and pellets were obtained. The cut length and the fiber length of the rayon fibers in the pellets were the same length. In FIG. 2, 31 indicates a roving, 10 indicates a melt of resin components, 22 indicates an impregnation die, 41, 42, 43, and 44 indicate impregnation rolls, 40B indicates a guide roll, 24 indicates a nozzle, and 32 indicates a strand.

Cracking of pellets

From the resulting pellets, 100 pellets were randomly extracted and visually evaluated as follows. Five experts each made the evaluation, and an average value was obtained.

A: Cracking was observed in less than 8% of the pellets
B: Cracking was observed in 8% or more and less than 15% of the pellets
C: Cracking was observed in 150 or more of the pellets

[Table 1]

| Composition | Unit | Example 1 | Example 2 | Example 3 | Example 4 | Comparative Example 1 | Comparative Example 2 | Comparative Example 3 | Comparative Example 4 |
|---|---|---|---|---|---|---|---|---|---|
| PP1 | mass% | 63 | - | - | 74 | 65 | - | - | - |
| PP2 | mass% | - | 63 | - | - | - | - | - | - |
| PP3 | mass% | - | - | - | - | - | 63 | - | - |
| PP4 | mass% | - | - | - | - | - | - | 63 | - |
| PP5 | mass% | - | - | - | - | - | - | - | 63 |
| PP6 | mass% | - | - | 63 | - | - | - | - | - |
| MAPP | mass% | 5 | 5 | 5 | 6 | 5 | 5 | 5 | 5 |
| Rayon fibers | mass% | 32 | 32 | 32 | 20 | - | 32 | 32 | 32 |
| Glass fibers | mass% | - | - | - | - | 30 | - | - | - |
| X-ray orientation | % | 92 | 92 | 92 | 92 | - | 92 | 92 | 92 |
| Number average fiber diameter | $\mu$m | 13 | 13 | 13 | 13 | 17 | 13 | 13 | 13 |
| Number of fibers passed through die | fibers | 5000 | 5000 | 5000 | 3000 | 4000 | 5000 | 5000 | 5000 |
| Pellet length | mm | 5 | 5 | 5 | 5 | 5 | 5 | 5 | 5 |
| MFR of thermoplastic resin | g/10 min | 110 | 155 | 82 | 110 | 110 | 295 | 55 | 66 |
| Pellet cracking | - | A | A | A | A | B | C | B | B |

The pellets of the present embodiment were able to effectively prevent pellet cracking during production.

Reference Signs List

1 Fiber bundle (strand) impregnated with thermoplastic resin
2 Roll
3 Pelletizer
31 Roving
10 Melt of resin components
22 Impregnation die
41, 42, 43, 44 Impregnation rolls
40B Guide roll
24 Nozzle
32 Strand

**Claims**

1. Pellets comprising:

   a thermoplastic resin; and
   a bundle of 2000 to 30000 rayon fibers arranged in parallel in the fiber length direction, wherein
   at least a portion of the thermoplastic resin is impregnated into the bundle of 2000 to 30000 rayon fibers,
   the thermoplastic resin has a melt flow rate (MFR) of 70 to 200 g/10 min when measured at a temperature of 230°C and a load of 2.16 kg according to JIS K 7210,
   the rayon fibers of the bundle have a number average fiber diameter of 5 to 30 um, and
   a number average length of the pellets is from 3 to 30 mm.

2. The pellets according to claim 1, wherein the thermoplastic resin comprises at least one selected from polypropylene resins and polyacetal resins.

3. The pellets according to claim 1 or 2, wherein the thermoplastic resin comprises

   an acid-unmodified polypropylene resin, and
   an acid-modified polypropylene resin modified with maleic anhydride and/or maleic acid.

4. The pellets according to any one of claims 1 to 3, wherein the pellets are obtained by impregnating a bundle of 2000 to 30000 rayon fibers in a state of being aligned in the length direction with the thermoplastic resin in a molten state to integrate, and then cutting the integrated bundle to have a number average length of 3 to 30 mm.

5. The pellets according to any one of claims 1 to 4, wherein a number average fiber length of the rayon fibers contained in the pellets is from 3 to 30 mm.

6. The pellets according to any one of claims 1 to 5, wherein an apparent Young's modulus of the rayon fibers is from 10 to 50 GPa.

7. The pellets according to any one of claims 1 to 6, wherein a tensile elongation of the rayon fibers is from 3 to 20%.

8. The pellets according to any one of claims 1 to 7, wherein in the pellets, a content of the thermoplastic resin is from 90 to 60 mass%, and a content of the rayon fibers is from 40 to 10 mass%.

9. The pellets according to any one of claims 1 to 8, wherein an X-ray orientation of the rayon fibers is 90% or more.

10. A pellet blend comprising the pellets described in any one of claims 1 to 9 and another type of thermoplastic resin pellets.

11. A molded article formed from the pellets described in any one of claims 1 to 9 and/or the pellet blend described in claim 10.

12. A method for producing the pellets described in any one of claims 1 to 9, the method comprising:
impregnating a bundle of 2000 to 30000 rayon fibers in a state of being aligned in the length direction with a thermoplastic resin in a molten state to integrate, and then cutting the integrated bundle to have a number average length of 3 to 30 mm.

# FIG. 1

FIG. 2

## INTERNATIONAL SEARCH REPORT

| International application No. |
|---|
| **PCT/JP2022/047396** |

**A. CLASSIFICATION OF SUBJECT MATTER**

*C08J 5/04*(2006.01)i; *C08J 3/12*(2006.01)i
FI: C08J5/04 CES; C08J3/12 Z

According to International Patent Classification (IPC) or to both national classification and IPC

**B. FIELDS SEARCHED**

Minimum documentation searched (classification system followed by classification symbols)

B29B11/16; B29B15/08-15/14; C08J3/00-3/28; C08J5/04-5/10; C08J5/24

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2013-091775 A (DAICEL POLYMER LTD) 16 May 2013 (2013-05-16)<br>claim 1, paragraphs [0010], [0014]-[0019], examples | 1-12 |
| A | JP 2018-187944 A (DAICEL POLYMER LTD) 29 November 2018 (2018-11-29)<br>claim 1, paragraphs [0014], [0018], [0024], examples | 1-12 |
| A | JP 2021-133538 A (MITSUI CHEMICALS INC) 13 September 2021 (2021-09-13)<br>claim 1, paragraphs [0009], [0032], [0065], examples | 1-12 |
| A | JP 2005-220173 A (IDEMITSU KOSAN CO LTD) 18 August 2005 (2005-08-18)<br>claim 1, paragraphs [0020], [0027]-[0028], [0050], examples | 1-12 |
| P, A | JP 2022-081402 A (DAICEL MIRAIZU LTD) 31 May 2022 (2022-05-31)<br>claim 1, paragraphs [0013], [0014], [0022], examples | 1-12 |

☐ Further documents are listed in the continuation of Box C.   ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **16 February 2023** | **28 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

<table>
<tr><th colspan="2" align="center">INTERNATIONAL SEARCH REPORT<br>Information on patent family members</th><th colspan="2">International application No.<br><b>PCT/JP2022/047396</b></th></tr>
<tr><th>Patent document<br>cited in search report</th><th>Publication date<br>(day/month/year)</th><th>Patent family member(s)</th><th>Publication date<br>(day/month/year)</th></tr>
<tr><td>JP 2013-091775 A</td><td>16 May 2013</td><td>US 2014/0343196 A1<br>claim 1, paragraphs [0014]-<br>[0015], [0027]-[0034],<br>examples</td><td></td></tr>
<tr><td>JP 2018-187944 A</td><td>29 November 2018</td><td>US 2017/0072596 A1<br>claim 1, paragraphs [0035],<br>[0045], examples</td><td></td></tr>
<tr><td>JP 2021-133538 A</td><td>13 September 2021</td><td>(Family: none)</td><td></td></tr>
<tr><td>JP 2005-220173 A</td><td>18 August 2005</td><td>KR 10-2007-0001944 A</td><td></td></tr>
<tr><td>JP 2022-081402 A</td><td>31 May 2022</td><td>(Family: none)</td><td></td></tr>
</table>

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005349697 A
- JP H06313050 A
- JP 2007176227 A
- JP H06002344 B
- JP H06114832 A
- JP H06293023 A
- JP H07205317 A
- JP H07216104 A
- JP H07251437 A
- JP H08118490 A

**Non-patent literature cited in the description**

- Cellulose and Cellulose Derivatives. Interscience publishers, 1954, vol. II